Europäisches Patentamt

European Patent Office

Office européen des brevets

(19)

(11) Veröffentlichungsnummer: **0 105 535**
**A1**

(12) **EUROPÄISCHE PATENTANMELDUNG**

(21) Anmeldenummer: 83201148.0

(22) Anmeldetag: 03.08.83

(51) Int. Cl.³: **B 62 D 1/04**
**B 60 Q 1/00**

(30) Priorität: 30.09.82 DE 3236257

(43) Veröffentlichungstag der Anmeldung:
18.04.84 Patentblatt 84/16

(84) Benannte Vertragsstaaten:
DE FR GB IT

(71) Anmelder: KARL SCHMIDT GMBH
Christian-Schmidt-Strasse 8/12 Postfach 1351
D-7107 Neckarsulm(DE)

(72) Erfinder: Bauer, Wolfgang
Welzheimer Strasse 5
-D-8757 Karlstein 1(DE)

(74) Vertreter: Fischer, Ernst, Dr.
Reuterweg 14
D-6000 Frankfurt am Main 1(DE)

(54) Sicherheitslenkrad.

(57) Bei einem mit einer Polyurethan-Integralschaumstoff-Schicht (5) umhüllten Sicherheitslenkrad ist der Kontaktgeber (6, 12, 17) der elektrischen Kontakteinrichtung für die Signalanlagen federnd in Kontaktabstand zum Gegenkontakt (2, 10, 16) gehaltert. Um die äthetische Wirkung des Sicherheitslenkrades zu verbessern und die Bauteile der elektrischen Kontakteinrichtung zu vereinfachen, ist als Kontaktgeber eine in die Polyurethan-Integralschaumstoff-Schicht eingeschäumte Metall-Kunststoff-Folie vorgesehen, die mittels einer elastischen Schaumstoffschicht (7, 11, 18) in Kontaktabstand gehaltert ist.

EP 0 105 535 A1

KARL SCHMIDT GMBH  
Postfach 20

7107 Neckarsulm

28. September 1982  
DRQ/USCHW (0963P)

Prov. Nr. 8929 KSL

## Sicherheitslenkrad

Die Erfindung betrifft ein Sicherheitslenkrad, insbesondere für Kraftfahrzeuge, bei dem die Nabe, die Speichen und der Kranz ganz oder teilweise mit einer Polyurethan-Integralschaumstoff-Schicht umhüllt und das wenigstens einen federnd in Kontaktabstand zum Gegenkontakt gehalterten Kontaktgeber der elektrischen Kontakteinrichtung für die Signalanlagen, vorzugsweise für das Signalhorn, aufweist.

Sicherheitslenkräder dieser Ausbildung befinden sich seit mehreren Jahren im Einsatz. Dabei wird das Lenkradskelett nach den aus der FR-PS 13 30 877 bekannten Verfahrensmaßnahmen mit einer Polyurethan-Integralschaumstoff-Schicht, die aus einer mikro-porösen Polyurethanhaut und einem angeschäumten Kern aus Polyurethanschaumstoff besteht, umschäumt. Die Elastizität der Polyurethan-Integralschaumstoff-Schicht verhindert eine Ermüdung und Verkrampfung der Hand und ermöglicht eine bessere Haftung, ohne daß die üblichen und manchmal unangenehmen Einkerbungen und Rillen der starren Lenkräder erforderlich sind. Bei einem Unfall wirkt die elastische Polyurethan-Integralschaumstoff-Schicht als Stoßdämpfer, da ein Teil der kinetischen durch den Aufschlag des Körpers des Fahrzeuglenkers verursachten Stoßenergie durch sie aufgenommen wird. Bei Herstellung der Polyurethan-Integralschaumstoff-Schicht ist es jedoch erforderlich, daß an den Stellen des Sicherheitslenkrads, an denen die Bauteile der elektrischen Kontakteinrichtung für die Signalanlagen anzuordnen sind, die Polyurethan-Integralschaumstoff-Schicht Aussparungen aufweisen muß, in die die den Kontaktgeber und Gegenkontakt bildenden Bauteile montiert werden müssen. Darüber hinaus sind die üblicherweise dafür verwendeten Bauteile der Kontakteinrichtungen, wie beispielsweise aus dem DE-GM 77 25 910 ohne weiteres zu entnehmen ist, relativ kompliziert in ihrem Aufbau und von daher mit einem beachtlichen Montageaufwand verbunden. Im übrigen wird die ästhetische Wirkung des Sicherheitslenkrades durch die in die Polyurethan-Integralschaumstoff-Schicht eingesetzten und deutlich sichtbaren Tasten für die Kontaktgeber erheblich beeinträchtigt. Zur Verbesserung der ästhetischen Wirkung ist bei dem in der DE-AS 19 48 615 wiedergegebenen mit einem Deformationskörper versehenen Sicherheitslenkrad zwar vorgesehen, daß auf der dem Fahrzeuglenker abgekehrten Seite des Deformationskörpers, der eine der beiden Kontakte und am Lenkrad selbst der andere Kontakt der elektrischen Kontakteinrichtung für die Signalanlagen sowie zwei Federn angebracht sind, von denen eine einer Annäherung und die andere einer Entfernung des Deformationskörpers an das bzw. vom Lenkrad entgegenwirkt, wodurch der Deformationskörper federnd im Kontaktabstand gehaltert ist. Der als Unfallschutz dienende Deformationskörper wird somit als Kontaktgeber für die elektrische Kontakteinrichtung und gleichzeitig zum Verdecken von deren Bauteilen benutzt.

Es ist die Aufgabe der vorliegenden Erfindung, die ästhetische Wirkung des eingangs näher beschriebenen Sicherheitslenkrads zu vervollkommenen und gleichzeitig sowohl die Bauteile der elektrischen Kontakteinrichtung für die Signalanlagen als auch deren Montage zu vereinfachen.

Die Lösung dieser Aufgabe besteht darin, daß der plattenförmige gestalte mit Speiche oder Nabe zusammenwirkende
Kontaktgeber aus einer in die Polyurethan-Integral-
Schaumstoff-Schicht eingeschäumten Metall-Kunststoff-Folie
besteht, deren Metallschicht über ein Kabel mit dem
Schleifring der Kontakteinrichtung verbunden ist, wobei
zwischen der Metallschicht der Metall-Kunststoff-Folie und
dem Gegenkontakt eine im Kontaktbereich ausgesparte
Schicht eines elastischen den Kontaktabstand halternden
Schaumstoff angeordnet ist.

Damit die Polyurethan-Integralschaumstoff-Schicht in sich
selbst nicht nachgeben kann, beträgt die Dicke der Polyurethan-Integralschaumstoff-Schicht über der Metall-Kunststoff-Folie maximal 3 mm.

In einer weiteren Ausführungsform der Erfindung dienen als
Gegenkontakt für die Metallschicht der Metall-Kunststoff-
Folie unmittelbar Speiche oder Nabe, eine auf Speiche oder
Nabe aufgebracht aus einem elektrisch gut leitendem Werkstoff bestehende Schicht oder eine auf Speiche oder Nabe
angeordnete mit ihrer Metallschicht zum Kontaktgeber
weisende Metall-Kunststoff-Folie.

In einer anderen Ausführungsform ist der Gegenkontakt
durch ein auf Speiche oder Nabe angebrachtes kontaktseitig
mit Noppen versehenes Blechstück gebildet, wobei die zwischen dem Blechstück und der als Kontaktgeber dienenden
Metall-Kunststoff-Folie vorhandene elastische Schaumstoffschicht im Bereich der Noppen ausgespart ist.

Bei einem Sicherheitslenkrad mit einem eingeschäumten Deformationskörper sind zweckmäßigerweise Kontaktgeber und
der mit Nabe oder Speiche in Verbindung stehende Gegenkontakt auf der zum Fahrzeuglenker weisenden Fläche des
Deformationsköpers angeordnet.

Der Kontaktabstand zwischen Kontaktgeber und Gegenkontakt beträgt zweckmäßigerweise 0,3 bis 6 mm, vorzugsweise 0,3 bis 1,2 mm.

Eine Abwandlung des erfindungsgemäß gestalteten Sicherheitslenkrades besteht darin, daß die über dem Kontaktgeber befindliche Polyurethan-Integralschaumstoff-Schicht ausgespart und in den Aussparungen ein elastisches Folienstück, Lederstück oder dergleichen angeordnet ist.

Das erfindungsgemäße Sicherheitslenkrad zeichnet sich dadurch aus, daß der Kontaktgeber und soweit ein besonderer Gegenkontakt verwendet ist, nicht mehr, wie bei den bekannten Sicherheitslenkrädern, nach dem Umhüllen des Lenkrades als gesonderte Bauteile montiert und am Lenkrad befestigt werden müssen, sondern daß Kontaktgeber bzw. Gegenkontakt unmittelbar in die Polyurethan-Integralschaumstoff-Schicht eingeschäumt sind. Auch wird die Zahl der Bauteile der elektrischen Kontakteinrichtung stark verringert, der Montageaufwand herabgesetzt und eine optimale ästhetische Wirkung erzielt, da das Sicherheitslenkrad eine völlig geschlossene Oberfläche aufweist.

Weitere Vorteile der erfindungsgemäßen Vorrichtung sind darin zu sehen, daß sich größere elektrische Signalströme direkt, d.h. ohne Zwischenschaltung eines Relais übertragen lassen. Da die Bauteile der elektrischen Kontakteinrichtung im wesentlichen flächig ausgebildet und flexibel sind, ist die Verletzungsgefahr für den Fahrzeuglenker im Falle eines Unfalls beträchtlich verringert.

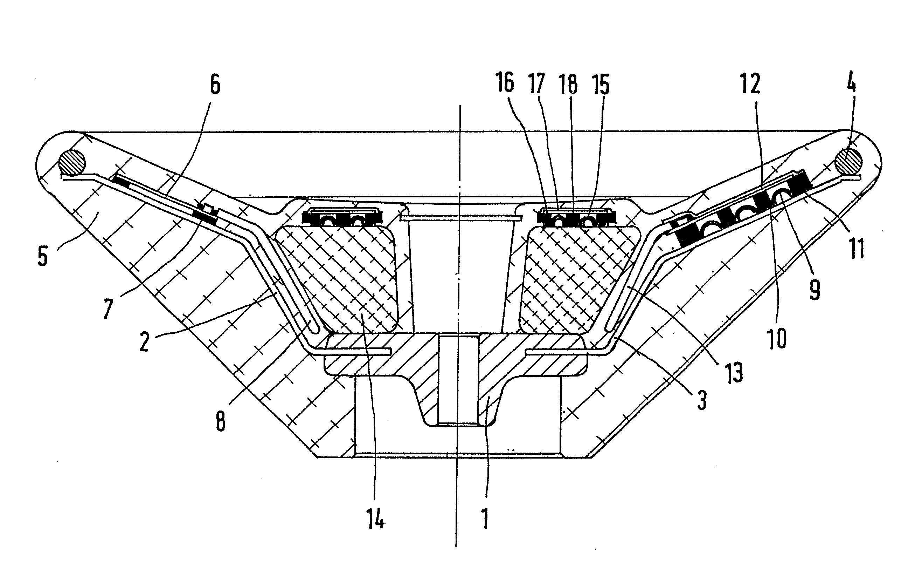

Die Erfindung ist in der Zeichnung beispielhaft veranschaulicht. Bei dem im Querschnitt dargestellten aus Nabe 1, Speichen 2, 3 und Kranz 4, die teilweise bzw. ganz mit einer Polyurethan-Integralschaumstoff-Schicht 5 umhüllt sind, bestehende Sicherheitslenkrad, ist auf der
linken Seite der Darstellung auf der Lenkradspeiche 2 ein
aus einer Metall-Kunststoff-Folie bestehender plattenförmiger Kontaktgeber 6 angebracht und unter Verwendung
einer in seinem Randbereich umlaufenden elastischen
Schaumstoffschicht 7 im Kontaktabstand zur Lenkradspeiche 2 höhenbeweglich gehaltert. An der zur Lenkradspeiche 2 weisenden Metallschicht der Metall-Kunststoff-
Folie ist das mit dem nicht dargestellten Schleifring verbundene Kabel 8 angeschlagen.

Auf der rechten Seite der Darstellung befindet sich ein
auf der Lenkradspeiche 3 angebrachtes mit Noppen 9 versehenes Blechstück 10, wobei die zwischen dem den Gegenkontakt bildenden Blechstück 10 und dem als Kontaktgeber
dienenden Metall-Kunststoff-Folie 12 befindliche den erforderlichen Kontaktabstand halternde elastische Schaumstoffschicht 11 im Bereich Noppen 9 ausgespart ist. Die
Metallshicht der Metall-Kunststoff-Folie hat über das
Kabel 13 mit dem Schleifring Kontakt.

Die Mitte der Darstellung zeigt einen auf der Lenkradnabe 1 angeordneten und eingeschäumten Deformationskörper 14. Auf der zum Fahrzeuglenker weisenden Oberfläche
des Deformationskörpers 14 ist ein mit Noppen 15 versehendes kreisringförmiges Blechstück 16 angeordnet. Die zwischen den Noppen und der den Kontaktgeber bildenden
Metall-Kunststoff-Folie 17 befindliche elastische Schaumstoffschicht 18 ist im Bereich der Noppen ausgespart und
bewirkt den notwendigen Kontaktabstand. Das Blechstück 16
ist über entsprechende Mittel mit der Lenkradnabe 1 oder
der Lenkradspeiche 2, 3 verbunden.

PATENTANSPRÜCHE

1. Sicherheitslenkrad, insbesondere für Kraftfahrzeuge, bei dem Nabe, Speichen und Kranz ganz oder teilweise mit einer Polyurethan-Integralschaumstoff-Schicht umhüllt sind, und das wenigstens einen mit Speiche oder Nabe zusammenwirkenden federnd in Kontaktabstand zum Gegenkontakt gehalterten Kontaktgeber der elektrischen Kontakteinrichtung für die Signalanlagen, vorzugsweise für das Signalhorn, aufweist, dadurch gekennzeichnet, daß ein plattenförmig gestalteter Kontaktgeber (6, 12, 17) aus einer in die Polyurethan-Integralschaumstoff-Schicht (5) eingeschäumten Metall-Kunststoff-Folie besteht, deren Metallschicht über ein Kabel (8, 13) mit dem Schleifring der elektrischen Kontakteinrichtung verbunden ist, wobei zwischen der Metallschicht der Metall-Kunststoff-Folie und dem Gegenkontakt (2, 10, 16) eine im Kontaktbereich ausgesparte Schicht (7, 11, 18) eines elastischen den Kontaktabstand halternden Schaumstoffs angeordnet ist.

2. Sicherheitslenkrad nach Anspruch 1, dadurch gekennzeichnet, daß die Dicke der Polyurethan-Integralschaumstoff-Schicht (5) über der Kunststoffschicht der Metall-Kunststoff-Folie (6, 12, 17) maximal 3 mm beträgt.

3. Sicherheitslenkrad nach den Ansprüchen 1 und 2, dadurch gekennzeichnet, daß als Gegenkontakt (2, 10, 16) die Lenkradspeiche (2) oder Lenkradnabe (1) dient.

4. Sicherheitslenkrad nach den Ansprüchen 1 bis 2, dadurch gekennzeichnet, daß als Gegenkontakt (2, 10, 16) eine auf der Lenkradspeiche (2) oder Lenkradnabe (1) aufgebrachte aus elektrische gut leitendem Werkstoff bestehende Schicht dient.

5. Sicherheitslenkrad nach den Ansprüchen 1 bis 2, <u>dadurch gekennzeichnet</u>, daß als Gegenkontakt eine auf der Lenkradspeiche oder Lenkradnabe angebrachte Metall-Kunststoff-Folie dient.

6. Sicherheitslenkrad nach den Ansprüchen 1 bis 2, <u>dadurch gekennzeichnet</u>, daß als Gegenkontakt ein auf Lenkradnabe oder Lenkradspeiche angebrachtes kontaktseitig mit Noppen (9, 15) versehenes Blechstück (10, 16) dient, wobei die elastische Schaumstoffschicht (11, 18) im Bereich der Noppen ausgespart ist.

7. Sicherheitslenkrad nach den Ansprüchen 1 bis 6, <u>gekennzeichnet durch</u> einen eingeschäumten Deformationskörper (14), auf dessen zum Fahrzeuglenker weisenden Oberfläche Gegenkontakt (16) und Kontaktgeber (17) angeordnet sind.

8. Sicherheitslenkrad nach den Ansprüchen 1 bis 7, <u>dadurch gekennzeichnet</u>, daß der Abstand zwischen Kontaktgeber (6, 12, 17) und Gegenkontakt (2, 10, 16) 0,3 bis 6 mm, vorzugsweise 0,3 bis 1,2 mm beträgt.

9. Abwandlung des Sicherheitslenkrades nach einem oder mehreren der Ansprüche 1 bis 8, <u>dadurch gekennzeichnet</u>, daß die über der Kunststoffschicht der den Kontaktgeber bildenden Metall-Kunststoff-Folie befindliche Polyurethan-Integralschaumstoff-Schicht ausgespart und in der Aussparung ein elastisches Folienstück, Lederstück oder dergleichen angeordnet ist.

Europäisches
Patentamt

## EUROPÄISCHER RECHERCHENBERICHT

EP 83 20 1148

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-B-2 347 255 (GENERAL MOTORS CORP.) * Ganzes Dokument * | 1 | B 62 D 1/04<br>B 60 Q 1/00 |
| | --- | | |
| Y | GB-A-1 438 486 (CLIFFORD COVERING CO. LTD.) * Seite 2, Zeilen 57-92; Figur 7 * | 1 | |
| | --- | | |
| Y | Patent Abstracts of Japan Band 2, Nr. 135, 10. Dezember 1978 Seite 4470M78 & JP-A-53-104929 | 1 | |
| | --- | | |
| A,D | DE-B-1 948 615 (PETRI AG.) * Ansprüche 1, 2; Figur 1 * | 1 | |
| | --- | | |
| A | DE-A-2 714 959 (F. WALLNER) * Ansprüche 1-3, 8; Figur 1 * | 7 | |
| | --- | | **RECHERCHIERTE SACHGEBIETE (Int. Cl. ³)** |
| A | US-A-3 476 897 (P. DE VINCENT) * Spalte 3, Zeilen 8-37; Figuren 1, 3 * | 8 | |
| | --- | | B 60 Q 1/00<br>B 60 Q 5/00<br>B 62 D 1/00 |
| A | DE-A-2 207 149 (DAIMLER-BENZ AG) | | |
| | --- | | |
| A | DE-A-2 943 907 (B. PILATZKI) | | |
| | ----- | | |

Der vorliegende Recherchenbericht wurde für alle Patentansprüche erstellt.

| Recherchenort<br>BERLIN | Abschlußdatum der Recherche<br>26-10-1983 | Prüfer<br>PETTI P |
|---|---|---|